# NEW EUROPEAN PATENT SPECIFICATION

(11) **EP 1 567 001 B2**
(45) Date of publication and mention of the opposition decision: **28.06.2017**
(45) Mention of the grant of the patent: 18.10.2006
(21) Application number: 03774441.4
(22) Date of filing: 01.12.2003
(51) Int. Cl.: A01K 1/12

(54) **AN APPARATUS FOR DETECTING ANIMALS**
VORRICHTUNG ZUR ERFASSUNG VON TIEREN
APPAREIL DE DETECTION D'ANIMAUX

(30) Priority: 03.12.2002 SE 0203580
(43) Date of publication of application: 31.08.2005
(73) Proprietor: DeLaval Holding AB, 147 21 Tumba (SE)
(72) Inventor: HILLFORTH, Mikael, S-138 36 Älta (SE)
(74) Representative: Lilliehorn, Tobias
(86) International application number: PCT/SE2003/001859
(87) International publication number: WO 2004/049790

(56) References cited:
- EP-A1- 0 213 660
- EP-A1- 0 706 760
- EP-A2- 0 501 639
- EP-A2- 0 561 071
- WO-A1-00/11940
- WO-A1-98/07311
- WO-A1-99/67631
- DE-A1- 19 918 100
- DE-C1- 19 619 099
- DE-U1- 20 018 646
- US- - 4 528 679
- US-A- 4 274 083
- US-A- 4 288 856
- US-A- 4 745 472
- US-A- 5 187 688
- US-A- 5 483 441
- US-A- 5 576 949
- US-A- 5 653 192
- US-A- 5 673 647
- US-B1- 6 213 052
- US-B1- 6 341 582

## Description

### THE BACKGROUND OF THE INVENTION AND PRIOR ART

The present invention refers to an apparatus for detecting an animal having a body part and a head part, comprising: an animal passage extending in a transport direction, said passage being defined by a first enclosure member and a second enclosure member, which members are arranged on a respective side of the passage and extend substantially in parallel to said transport direction, and a sensor device, which is arranged to sense the animal in the passage.

The present invention refers to the managing of animals in general. The invention is thus applicable to animals such as cows, sheep, goats, horses, buffaloes etc. In the following, it will be referred to the managing of cows although the application is not limited to any specific kind of animals. All these animals to which the present invention is applicable have a head part formed by the neck and the head of the animal, and a body part extending rearwardly from the neck and formed by the body and including the rear legs and the forward legs of the animal.

When managing cows it is often important to be able to detect the position of an individual cow with a high precision. When a number of cows are moving forwardly in a passage, a so-called lane, it is necessary to be able to interrupt the movement of the cows by means of an interruption gate, a so-called saloon gate, or to redirect one or several cows from the passage by means of a direction gate. If these gates are not working in a manner synchronised with the position of the cows, the function is not reliable and the efficiency of the managing of the cows is negatively influenced. The cows are sometimes walking so close to each other in a train of cows in such a passage that there is no completely free space between the cows. In such a situation, it is difficult to detect the individual cows by means of conventional detector and sensing means including, for instance, a photo cell.

It is also known to provide the cows with a transponder for the identification of the cows. By means of such a transponder, it is possible to detect the position of the cow for the control of the interruption gate to be closed behind the cow. However, the precision in such a detection by means of a transponder is not sufficient, making it difficult to close the interruption gate between two successive cows, and also creating a risk of hurting or injuring the cows. Moreover, a fact that is not taken into account in the prior art solutions is that the cows may have various lengths, which also means that the interruption gate will not always close in an optimum manner behind the cow.

Various apparatuses including means for detecting and sensing animals are described in the patent literature.

US-A-5,653,192 discloses an apparatus for sorting animals. The apparatus comprises a passage defined by longitudinal rails. An identifying sensor is provided for identifying the animals walking along the passage by sensing a transponder carried by the animals. The identifying sensor includes two antennas arranged on a respective side of the passage.

US-A-4,288,856 discloses a system for managing a live-stock having means for separating poorly performing animals. The system includes a passage with gates and photo detectors. The photo detector may include a photo cell on one side of the passage and a light source on the other side of the passage, wherein the light beam is broken by the animal passing the detector.

US-A-4,274,083 discloses an apparatus for identifying moving objects, for instance an animal carrying a transponder. The cow carrying the transponder may be identified when passing a loop antenna.

### SUMMARY OF THE INVENTION

The object of the present invention is to provide an apparatus for detecting an animal, and more specifically for detecting an animal with a high precision at a determined position.

This object is achieved by the apparatus initially defined, which is characterised in that the sensor device is arranged to sense a parameter related to a width of the animal seen in a determined direction at a determined position in the passage, wherein the sensor device is arranged to produce a signal when said parameter indicates that the width of the animal is less than a predetermined valve at the determined position. By such an apparatus it is possible to detect in a reliable manner the exact position of the front end of the animal, or more precisely the beginning of the body part, and the rear end of the animal, or more precisely the rear end of the body part. A cross-section size, such as the width of the animal, normally varies along the length of the animal in such a way that the largest cross-section size of the head part of the animal is smaller than the smallest cross-section size of the body part of the animal. By using a sensor device detecting such a cross-section size, it is thus possible to identify the beginning and the end of the body part of the animal. Even if the animals are walking very close to each other so that the head of an animal is lying on the body part of the forward animal, it is possible to detect the short gap or short distance between the end of the body part of the forward animal and the beginning of the body part of the following animal, since there is always a reduction in the cross-section size between the animals.

According to the present invention, the sensor device is arranged to produce said signal when the value of said parameter indicates that the cross-section size of the animal is less than a predetermined value at the determined position. Consequently, the sensor device may be arranged to detect when the cross-section size of the animal is less than the cross-section size of the body part of the animal. More precisely, the parameter may be related to the width of the animal seen in a determined direction, wherein the sensor device is arranged to produce said signal when said parameter indicates that the width of the animal is less than a predetermined value at the determined position. Preferably, the determined direction is a substantially vertical direction. The difference in the horizontal width between the body part and the head part of the animal is substantially constant, and particularly easy to identify in a vertical direction. Moreover, the determined direction may advantageously be a substantially vertically downward direction. It is advantageous to arrange the sensor device above the animals in such a way that they are directed downwards since the environment is better and less subjected to dirt above the animals.

According to a further embodiment of the present invention, the determined direction is a substantially horizontal direction. The sensor device may thus be directed vertically downwards, horizontally or in any direction therebetween.

According to a further embodiment of the present invention, the sensor device comprises at least a first sensor and a second sensor, wherein the first sensor is arranged to sense the presence of the animal at a first point of the passage and wherein the second sensor is arranged to sense the presence of the animal at a second point of the passage. Advantageously, the first point and the second point are both located at the determined position with regard to the transport direction, but spaced apart from each other with a distance, wherein said distance is larger than the width of the head part but smaller than the width of the body part of an animal of a normal size to be guided through the animal passage.

According to a further embodiment of the present invention, the first point is located in the proximity of the first enclosure member whereas the second point is located in the proximity of the second enclosure member. The first and second points are thus located inside the respective enclosure member within the passage. Furthermore, the first sensor and the second sensor are both provided above the passage to sense the animal passing below the respective first and second sensors.

According to a further embodiment of the present invention, the apparatus comprises a control member connected to the sensor device. Preferably, the control member may be arranged to count the animals passing the animal passage in response to the sensing of the sensor device. The apparatus according to the invention may thus be used for counting the animals passing through the passage.

According to a further embodiment of the present invention, the apparatus comprises a gate device arranged in the passage to take one of an open position and a closed position. The control member may then be arranged to control the position of the gate device in response to the sensing of the sensor device. The gate device may include a gate, which is provided in the proximity of the sensor device and arranged to close the passage, and thus to stop the following animals from moving further forward in the passage and to permit such further forward movement in the transport direction when so desired. Moreover, the gate device may include a gate, which is provided in the proximity of the sensor device and arranged to close the passage and open an exit passage leading away from the passage, and thus to direct a specific animal in a desired direction away from the passage or along the passage.

### BRIEF DESCRIPTION OF THE DRAWINGS

The present invention will now be described more closely by means of various embodiments thereof and with reference to the drawings attached hereto.
- Fig 1: shows schematically a view from above of an apparatus according to a first embodiment of the present invention.
- Fig 2: shows schematically a view from above of an apparatus according to a second embodiment of the present invention.
- Fig 3: shows schematically a view from above of an apparatus according to a third embodiment of the present invention.

### DETAILED DESCRIPTION OF VARIOUS EMBODIMENTS OF THE INVENTION

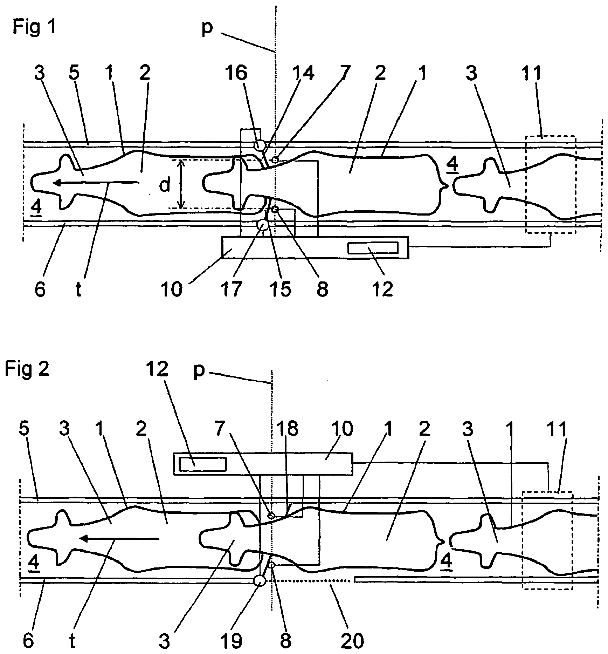

Figs. 1, 2 and 3 disclose a respective embodiment of an apparatus for detecting an animal. The animal is in the embodiments disclosed a cow 1. The cow 1 has a body part 2 and a head part 3. The head part 3 includes the head and the neck of the cow 1. The body part 2 extends rearwardly from the neck and includes the body with the forward legs and the rearward legs of the cow 1.

The apparatus comprises an animal passage 4 extending in a transport direction t. The animal passage 4 is in the embodiments disclosed an elongated space defined by a first enclosure member 5 and a second enclosure member 6. The enclosure members 5 and 6 may comprise usual metallic rail constructions dimensioned to withstand forces from the cows 1 and prevent them from deviating from the animal passage 4. The first enclosure member 5 and the second enclosure member 6 both extend in the longitudinal transport direction t on a respective side of the animal passage 4.

The apparatus also comprises a sensor device 7, 8, which is arranged to sense the cows 1 moving forwardly in the transport direction t in the animal passage 4. More specifically, the sensor device 7, 8 is arranged to sense the cows 1 at a determined position in the passage 4. The determined position is indicated by the transverse line p extending substantially perpendicular to the transport direction t. Consequently, the determined position means that the cow 1 has reached a certain position with regard to the longitudinal direction t, whereas the transverse position of the cows 1 in the animal passage 4 is substantially defined by the enclosure members 5 and 6.

The sensor device 7, 8 is arranged to sense a cross-section size of the cow 1 at the determined position p. In the embodiments disclosed, the horizontal width of the cows 1, i.e. the width seen in a vertical direction is sensed. The horizontal width of the cows 1 is one of several possible cross-section sizes of the cow 1. However, also other widths than the horizontal width may be sensed according to this invention, for instance a vertical width or any width sensed between the horizontal width and the vertical width. Cows and other animals to which the invention is applicable normally have a cross-section size and a horizontal width that varies along the length of the cow 1. More specifically, the body part 2 has a significantly greater horizontal width than the head part 3. When the cows 1 are crowded in the passage 4 and thus are present very close to each other in a train of cows 1, as appears from Figs. 1 and 2, in such a way that the head part 3 of a first cow 1 lies partly above the body part 2 of a second forward cow 1 there will be a gap or a distance between the body part 2 of the first cow 1 and the body part 2 of the second cow 1. Since the head part 3 of the first cow 1 has a smaller width than the body part 2 of the second forward cow 1, the cross-section size of the train of cows 1 will be smaller at this gap between the first cow 1 and the second cow 2. The sensor device 7, 8 is thus arranged to sense the cross-section size and to produce a signal when the parameter fulfils a certain condition, i. e. when the cross-section size of the cow 1 is less than a predetermined value at the determined position p. In the embodiments disclosed, the sensor device 7, 8 is arranged to produce a signal when the horizontal width of the cow 1 is less than a predetermined value at the determined position p. The sensor device 7, 8 is thus arranged to sense the cows 1 in a determined direction which is a substantially vertically, downward direction.

In the embodiments disclosed, the cross-section concerned thus extends in a plane substantially perpendicular to the transport direction. It is to be noted, however, that the invention also is applicable with a cross-section extending in a plane having a normal direction forming an angle of inclination with the transport direction t.

In the embodiments disclosed, the sensor device 7, 8 comprises a first sensor 7 and a second sensor 8. The first sensor 7 is arranged to sense the presence of a cow 1 at a first point of the passage 4 whereas the second sensor 8 is arranged to sense the presence of said cow 1 at a second point of the passage 4. The first point and the second point are both located at the determined position p with regard to the transport direction t. The first point and the second point are thus located along the transverse line p but spaced apart from each other with a distance d. The distance d between the first point and the second point is selected in such a way that the distance d is larger than the horizontal width of the head part 3 of a cow 1 of a normal size, but smaller than the horizontal width of the body part 2 of a cow 1 of a normal size. In the embodiments disclosed, the first sensor 7 and the second sensor 8 are both located vertically above the first point and the second point, respectively, in the passage 4. As appears from Figs. 1 and 2, the first sensor 7 and the first point is located in the proximity of the first enclosure member 5 seen in a vertical direction. The second sensor 8 and the second point is located in the proximity of the second enclosure member 6 seen in a vertical direction. The first sensor 7 and the second sensor 8 are thus provided above the animal passage 4 and the cows 1 in order to be able to sense cows 1 passing below the respective sensors 7 and 8.

The sensors 7, 8 may be of any suitable kind, for instance optical sensors, such as photo cells or video cameras, or any other proximity sensors, such as IR-sensors. It is to be noted that the invention is not limited to any kind of sensor but that any suitable sensor which is and will be available may be used. For instance, each of the sensors 7 and 8 may include a light-emitting member producing a light beam, such as a laser member, and a photo cell sensing the emitted light. The presence of the animal is the detected when the light beam is broken by the animal.

The apparatus also comprises a control member 10 schematically disclosed in Figs. 1 and 2. The control member 10 is connected to the sensor device, i. e. to the first sensor 7 and the second sensor 8, and arranged to receive the signals produced by the sensors 7 and 8. The apparatus may also include an identification device 11 arranged in the proximity of the animal passage 4 for identifying the individual cows 1 passing through the animal passage 4. The identification device 11 may be of any conventional kind, for instance of a kind identifying the cows 1 by means of a transponder (not disclosed) carried by the cows 1. The identification device 11 is also connected to the control member 10 and arranged to produce an identification signal to be received by the control member 10. The control member 10 may comprise a processor 12, schematically disclosed, for processing the signals from the sensors 7 and 8 and the identification signal from the identification device 12 and for producing output signals to be delivered to further equipment to be described below. For instance, the control member 10 and the processor 12 may be arranged to count the cows 1 passing through the animal passage 4 in response to the signals produced by the sensors 7 and 8. The counted number of cows 1 may be delivered to a main control and supervising system provided in for instance a milking barn housing a large number of cows 1 and including an animal passage 4 extending between different areas of the barn.

The apparatus may also comprise one or several gate devices provided in or in the proximity of the animal passage 4 and arranged to take one of an open position and a closed position. The gate device in Fig. 1 includes a so-called interruption gate 14, 15 arranged to close the passage to prevent cows 1 from moving forward in the animal passage 4. The interruption gate 14, 15 includes, in the embodiment disclosed, two gate doors 14, 15, which are displaceable between said open position and said closed position by means of a respective associated activator 16, 17. The interruption gate 14, 15 is connected to the control member 10. The control member 10 and the processor 12 is arranged to control the position of the interruption gate 14, 15 to one of said open and closed positions. It is to be noted that the interruption gate 14, 15 also may be formed by one gate only and one actuator associated with the gate.

Fig. 2 discloses a second embodiment in which the gate device includes a direction gate 18 displaceable by means of an associated activator 19. The gate 18 is arranged to take a closed position or an open position. In the closed position, the animal passage 4 is closed and an exit passage 20 leading away from the animal passage 4 is open. In the open position, the animal passage 4 is open for passage by the cows 1 whereas the exit passage 20 is closed.

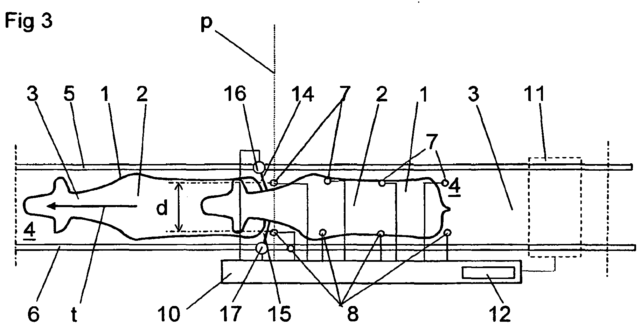

In the embodiments disclosed in Figs 1 and 2, there are merely sensors 7,8 arranged in one plane perpendicular to the transport direction t. However, according to a third embodiment disclosed in Fig 3, two, three, four or more sensors may be arranged along one line, or two separate lines, being parallel to the transport direction t. In the third embodiment two rows of sensors with four sensors 7, 8 in each row are provided. By means of such plurality of sensors it is also possible to determine a cross-section size of the animal, not only at one point along the transport direction but at several points along the transport direction. In such a way, an image of the contour of the animal may be created. When such a contour is recognised it may be assumed that an animal is present at a determined position.

The present invention is not limited to the embodiments disclosed herein but may be varied and modified within the scope of the following claims.

## Claims

1. An apparatus for detecting an animal (1) having a body part (2) and a head part (3), comprising:
an animal passage (4) extending in a transport direction (t), said passage being defined by a first enclosure member (5) and a second enclosure member (6), which members are arranged on a respective side of the passage (4) and extend substantially in parallel to said transport direction (t), and a sensor device (7,8), which is arranged to sense the animal (1) in the passage (4),
**characterised in that** the sensor device (7,8) is arranged to sense a parameter related to the width of the animal (1) seen in a determined direction, at a determined position (p) in the passage (4), and wherein the sensor device (7,8) is arranged to produce a signal when said parameter indicates that the width of the animal (1) is less than a predetermined value at the determined position (p).

2. An apparatus according to claim 1, **characterised in that** the determined direction is a substantially vertical direction.

3. An apparatus according to any one of claims 1 and 2, **characterised in that** the determined direction is a substantially vertically downward direction.

4. An apparatus according to claim 1, **characterised in that** the determined direction is a substantially horizontal direction.

5. An apparatus according to any one of the preceding claims, **characterised in that** the sensor device (7,8) comprises at least a first sensor (7) and a second sensor (8), wherein the first sensor (7) is arranged to sense the presence of the animal (1) at a first point of the passage (4) and wherein the second sensor (8) is arranged to sense the presence of the animal (1) at a second point of the passage (4).

6. An apparatus according to claim 5, **characterised in that** the first point and the second point are both located at the determined position (p) with regard to the transport direction (t) but spaced apart from each other with a distance (d), wherein said distance (d) is larger than the width of the head part (3) but smaller than the width of the body part (2) of an animal (1) of a normal size to be guided through the animal passage (4).

7. An apparatus according to any one of claims 5 and 6, **characterised in that** the first point is located in the proximity of the first enclosure member (5) whereas the second point is located in the proximity of the second enclosure member (6).

8. An apparatus according to any one of claims 5 to 7, **characterised in that** the first sensor (7) and the second sensor (8) both are provided above the passage (4) to sense the animal (1) passing below the respective first and second sensors (7,8).

9. An apparatus according to any one of the preceding claims, **characterised in that** the apparatus comprises a control member (10) connected to the sensor device (7,8).

10. An apparatus according to claim 9, **characterised in that** the control member (10) is arranged to count the animals (1) passing the animal passage (4) in response to the sensing of the sensor device (7,8).

11. An apparatus according to any one of the preceding claims, **characterised in that** the apparatus comprises a gate device (14,15 ; 18) arranged in the passage (4) to take one of an open position and a closed position.

12. An apparatus according to claims 9 and 11, **characterised in that** the control member (10) is arranged to control the position of the gate device (14,15 ; 18) in response to the sensing of the sensor device (7,8).

13. An apparatus according to any one of claims 11 and 12, **characterised in that** the gate device includes a gate (14,15), which is provided in the proximity of the sensor device (7,8) and arranged to close the passage (4).

14. An apparatus according to any one of claims 11 to 13, **characterised in that** the gate device includes a gate (18), which is provided in the proximity of the sensor device (7, 8) and arranged to close the passage (4) and open an exit passage (20) leading away from the passage (4).

## Patentansprüche

1. Vorrichtung zum Erfassen eines Tieres (1) mit einem Körperteil (2) und einem Kopfteil (3), umfassend:
einen Tierdurchgang (4), der sich in einer Transportrichtung (t) erstreckt, wobei der Durchgang von einem ersten Einfassungselement (5) und
einem zweiten Einfassungselement (6) definiert ist, und wobei die Elemente auf einer jeweiligen Seite des Durchgangs (4) angeordnet sind und sich im wesentlichen parallel zur Transportrichtung (t) erstrecken, und
eine Sensorvorrichtung (7, 8), die zum Erfassen des Tieres (1) im Durchgang (4) dient,
**dadurch gekennzeichnet, dass** die Sensorvorrichtung (7, 8) zum Erfassen eines Parameters dient, der Parameter sich auf die Breite des Tieres (1), gesehen in einer vorbestimmten Richtung, an einer bestimmten Position (p) im Durchgang (4) bezieht, und wobei die Sensorvorrichtung (7, 8) ein Signal ausgibt, wenn der Parameter anzeigt, dass die Breite des Tieres (1) an der vorbestimmten Position (p) kleiner ist als ein vorbestimmter Wert.

2. Vorrichtung nach Anspruch 1, **dadurch gekennzeichnet, dass** die vorbestimmte Richtung eine im wesentlichen vertikale Richtung ist.

3. Vorrichtung nach einem der Ansprüche 1 und 2, **dadurch gekennzeichnet, dass** die vorbestimmte Richtung im wesentlichen vertikal abwärts gerichtet ist.

4. Vorrichtung nach Anspruch 1, **dadurch gekennzeichnet, dass** die vorbestimmte Richtung eine im wesentlichen horizontale Richtung ist.

5. Vorrichtung nach einem der vorangegangenen Ansprüche, **dadurch gekennzeichnet, dass** die Sensorvorrichtung (7, 8) mindestens einen ersten Sensor (7) und einen zweiten Sensor (8) umfasst, wobei der erste Sensor (7) zum Erfassen der Anwesenheit des Tieres (1) an einem ersten Punkt des Durchgangs (4) dient und der zweite Sensor zum Erfassen der Anwesenheit des Tieres (1) an einem zweiten Punkt des Durchgangs (4).

6. Vorrichtung nach Anspruch 5, **dadurch gekennzeichnet, dass** der erste Punkt und der zweite Punkt beide an der vorbestimmten Position (p) in Bezug auf die Transportrichtung (t) liegen, jedoch voneinander um einen Abstand (d) beabstandet, wobei der Abstand (d) größer ist als die Breite des Kopfteiles (3), aber kleiner als die Breite des Körperteiles (2) eines Tieres (1) normaler Größe, das durch den Tierdurchgang (4) geleitet wird.

7. Vorrichtung nach einem der Ansprüche 5 und 6, **dadurch gekennzeichnet, dass** der erste Punkt in der Nähe des ersten Einfassungselementes (5) angeordnet ist, während der zweite Punkt in der Nähe des zweiten Einfassungselementes (6) angeordnet ist.

8. Vorrichtung nach einem der Ansprüche 5 bis 7, **dadurch gekennzeichnet, dass** der erste Sensor (7) und der zweite Sensor (8) beide oberhalb des Durchgangs (4) angeordnet sind, um das Tier (1) zu erfassen, das unter dem jeweils ersten bzw. zweiten Sensor (7, 8) hindurchläuft.

9. Vorrichtung nach einem der vorangegangenen Ansprüche, **dadurch gekennzeichnet, dass** die Vorrichtung ein Steuerelement (10) umfasst, das mit der Sensorvorrichtung (7, 8) verbunden ist.

10. Vorrichtung nach Anspruch 9, **dadurch gekennzeichnet, dass** das Steuerelement (10) dazu dient, in Reaktion auf die Erfassung durch die Sensorvorrichtung (7, 8) die Tiere (1) zu zählen, die durch den Tierdurchgang (4) laufen.

11. Vorrichtung nach einem der vorangegangenen Ansprüche, **dadurch gekennzeichnet, dass** die Vorrichtung eine Torvorrichtung (14, 15; 18) umfasst, die im Durchgang (4) angeordnet ist und eine offene und eine geschlossene Position annehmen kann.

12. Vorrichtung nach Anspruch 9 und 11, **dadurch gekennzeichnet, dass** das Steuerelement (10) zur Steuerung der Position der Torvorrichtung (14, 15; 18) in Reaktion auf die Erfassung durch die Sensorvorrichtung (7, 8) dient.

13. Vorrichtung nach einem der Ansprüche 11 und 12, **dadurch gekennzeichnet, dass** die Torvorrichtung ein Tor (14, 15) umfasst, das in der Nähe der Sensorvorrichtung (7, 8) angeordnet ist und zum Schließen des Durchgangs (4) dient.

14. Vorrichtung nach einem der Ansprüche 11 bis 13, **dadurch gekennzeichnet, dass** die Torvorrichtung ein Tor (18) umfasst, das in der Nähe der Sensorvorrichtung (7, 8) angeordnet ist und zum Schließen des Durchgangs (4) und Öffnen eines Ausgangs (20) dient, der vom Durchgang (4) weg führt.

## Revendications

1. Appareil pour détecter un animal (1) ayant une partie de corps (2) et une partie de tête (3), comprenant :
un passage (4) pour animal s'étendant dans une direction de déplacement (t), ledit passage étant défini par un premier élément d'enceinte (5) et un second élément d'enceinte (6), lesquels éléments sont agencés sur un côté respectif du passage (4) et
s'étendent sensiblement parallèlement à ladite direction de déplacement (t), et
un dispositif de détection (7, 8), qui est agencé de manière à détecter l'animal (1) dans le passage (4),
**caractérisé en ce que** le dispositif de détection (7, 8) est agencé de manière à détecter un paramètre se rapportant à la largeur de l'animal (1) vu dans une direction déterminée au niveau d'une position (p) déterminée dans le passage (4),
dans lequel le dispositif de détection (7, 8) est agencé de manière à produire un signal lorsque ledit paramètre indique que la largeur de l'animal (1) est inférieure à une valeur prédéterminée au niveau de la position (p) déterminée.

2. Appareil selon la revendication 1, **caractérisé en ce que** la direction déterminée est une direction sensiblement verticale.

3. Appareil selon l'une quelconque des revendications 1 et 2, **caractérisé en ce que** la direction déterminée est une direction sensiblement descendante verticalement.

4. Appareil selon la revendication 1, **caractérisé en ce que** la direction déterminée est une direction sensiblement horizontale.

5. Appareil selon l'une quelconque des revendications précédentes, **caractérisé en ce que** le dispositif de détection (7, 8) comprend au moins un premier capteur (7) et un second capteur (8), dans lequel le premier capteur (7) est agencé de manière à détecter la présence de l'animal (1) au niveau d'un premier point du passage (4) et dans lequel le second capteur (8) est agencé de manière à détecter la présence de l'animal (1) au niveau d'un second point du passage (4).

6. Appareil selon la revendication 5, **caractérisé en ce que** le premier point et le second point sont tous deux situés au niveau de la position (p) déterminée par rapport à la direction de déplacement (t) mais espacés l'un de l'autre d'une distance (d), dans lequel ladite distance (d) est supérieure à la largeur de la partie de tête (3) mais inférieure à la largeur de la partie de corps (2) d'un animal (1) de taille normale qui doit être guidé à travers le passage (4) pour animal.

7. Appareil selon l'une quelconque des revendications 5 et 6, **caractérisé en ce que** le premier point est situé à proximité du premier élément d'enceinte (5) tandis que le second point est situé à proximité du second élément d'enceinte (6).

8. Appareil selon l'une quelconque des revendications 5 à 7 **caractérisé en ce que** le premier capteur (7) et le second capteur (8) sont tous deux disposés au-dessus du passage (4) de manière à détecter l'animal (1) passant sous les premier et second capteurs (7, 8) respectifs.

9. Appareil selon l'une quelconque des revendications précédentes, **caractérisé en ce que** l'appareil comprend un élément de contrôle (10) relié au dispositif de détection (7, 8).

10. Appareil selon la revendication 9, **caractérisé en ce que** l'élément de contrôle (10) est agencé de manière à compter les animaux (1) traversant le passage (4) pour animal en réponse à la détection du dispositif de détection (7, 8).

11. Appareil selon l'une quelconque des revendications précédentes, **caractérisé en ce que** l'appareil comprend un dispositif formant porte (14, 15 ; 18) agencé dans le passage (4) de manière à adopter l'une d'une position ouverte et d'une position fermée.

12. Appareil selon les revendications 9 et 11, **caractérisé en ce que** l'élément de contrôle (10) est agencé de manière à contrôler la position du dispositif formant porte (14, 15 ; 18) en réponse à la détection du dispositif de détection (7, 8).

13. Appareil selon l'une quelconque des revendications 11 et 12, **caractérisé en ce que** le dispositif formant porte comprend une porte (14, 15), qui est disposée à proximité du dispositif de détection (7, 8) et agencée de manière à fermer le passage (4).

14. Appareil selon l'une quelconque des revendications 11 à 13, **caractérisé en ce que** le dispositif formant porte comprend une porte (18), qui est disposée à proximité du dispositif de détection (7, 8) et agencée de manière à fermer le passage (4) et à ouvrir un passage de sortie (20) éloignant du passage (4).
